# EUROPEAN PATENT APPLICATION

(11) **EP 0 942 546 A2**
(43) Date of publication of application: **15.09.1999**
(21) Application number: 99102884.6
(22) Date of filing: 04.03.1999
(51) Int. Cl.: H04J 3/06, H04J 13/02, H04B 7/26

(54) **CDMA communication apparatus and CDMA communication method**

(30) Priority: 10.03.1998 JP 7831498
(71) Applicant: MATSUSHITA ELECTRIC INDUSTRIAL CO., LTD., Kadoma-shi, Osaka-fu, 571 (JP)
(72) Inventor: Watanabe, Masatoshi, Yokohama-shi, Kanagawa 233-0008 (JP)
(74) Representative: Grünecker, Kinkeldey, Stockmair & Schwanhäusser Anwaltssozietät

(57) **Abstract**

In a communication terminal apparatus 21, a transmitting data processing section 205 provides guard time having no data to the end portion of reverse control data to form the frame when transmitting reverse control data including call request data. And a radio transmitting section 206 orthogonally modulates reverse data input from the transmitting data processing section 205 and frequency-converts the same. Then, the radio transmitting section 206 controls timing using timing information input form a synchronization processing section 203, and transmits the resultant data from an antenna 201. As a result, even if control data is transmitted from a different communication terminal apparatus one frame earlier or later, a base station can receive respective control data in a frame period from a receiving section of one channel, and decode the same.

## Description

### BACKGROUND OF THE INVENTION

### Field of the Invention

The present invention relates to a CDMA communication apparatus and a CDMA communication method that are used in a cellular system.

### Description of the Related Art

The radio communication system such as a car phone, a cellular phone, etc. is one that divides service area into cells, installs a base station in each cell, and performs communications simultaneously in the same frequency band as those of a plurality of communication terminal apparatuses existing in each cell.

As a multiple access system for use in the radio communication system, FDMA (Frequency Division Multiple Access), TDMA (Time Division Multiple Access), CDMA (Code Division Multiple Access) are used.

Among these systems, the CDMA system can be explained as follows.

Specifically, transmitting data is spread out over a wide frequency band using an inherent spreading code for each channel so as to be multiplexed. Then, receiving data is despread using the same code as the spreading code so as to be extracted from multiplexing data after being separated from the other channel components.

The CDMA system can obtain a high efficiency of frequency utilization at which a large number of users can be contained as compared with the other systems, and is excellent in privacy, concealment, and resistance to interference.

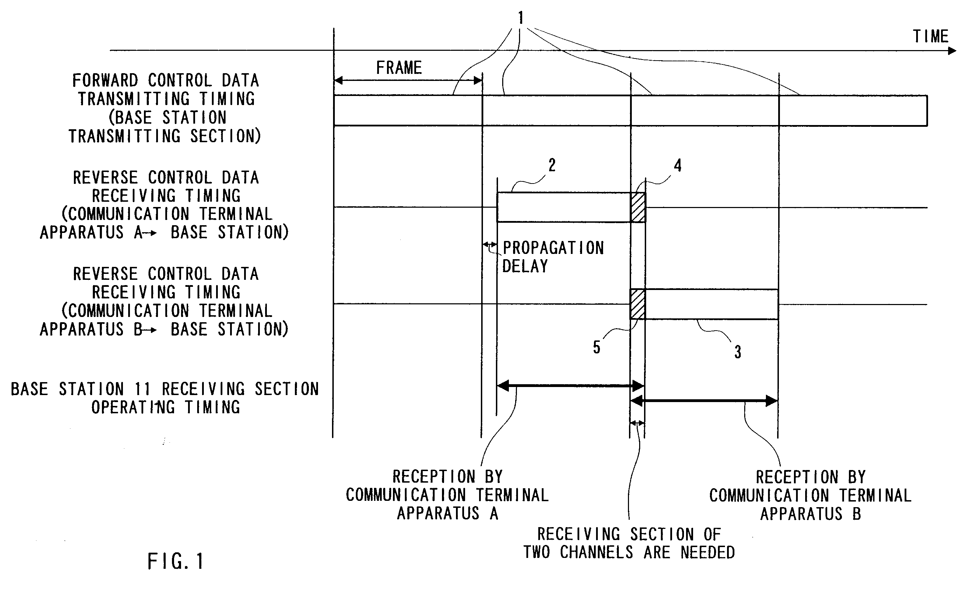

The following will explain random access operations to communication establishment in the radio communication system using the conventional CDMA communication apparatus with reference to a frame timing view of FIG. 1.

In the explanation set forth below, data, which is transmitted from the base station and received by the communication terminal apparatus, is referred to as forward data, and data, which is transmitted from the communication terminal apparatus and received by the base station, is referred to as reverse data.

The base station transmits transmitting control data 1 spread by use of the spreading code, which is known in the entire system. At this time, the base station forms forward control data 1 in a frame unit having a fixed length in time, and transmits the same in the frame unit.

In a case of performing a call, communication terminal apparatuses A, B, provided in the cell, spread reverse control data 2, 3 including call request data by use of the spreading code known in the entire system and transmit the same to the base station. At this time, communication terminal apparatuses A, B synchronize reverse control data 2, 3 with forward control data 1 so as to be transmitted. Resultantly, frame timing of reverse control data in the random access is known, and the reception of reverse control data and the demodulation thereof can be carried out.

Then, the base station allocates a spreading code for communications to the communication terminal apparatus permitting communications to be performed. Then, the base station transmits forward control data, in which an identification number of a communicable communication terminal apparatus and information of the allocated spreading code, etc. are included, to the communication terminal apparatus.

When the communication terminal apparatus can read the identification number of the self-station from the forward control data, the communication terminal apparatus discriminates that communications have been permitted. Then, the communication terminal apparatus carries out communications using the allocated spreading code. Also, when the communication terminal apparatus can not read the identification number of the self-station from the forward control data, the communication terminal apparatus discriminates that reverse control data transmitted by the self-station has not been received by the base station. Then, the communication terminal apparatus transmits reverse control data including call request data to the base station again.

Since the distance between the communication terminal apparatus and the base station differs from one communication terminal apparatus to another, wave propagation time also differs from one communication terminal apparatus to another. Therefore, reception timing of reverse control data 2, 3 in the base station is delayed by reciprocative wave propagation time as compared with transmission time of transmitting control data.

It is assumed that two different communication terminal apparatuses transmit burst-type control data one frame time earlier or later. Moreover, it is assumed that the distance between one communication terminal apparatus A, which has transmitted reverse control data prior to communication terminal apparatus B, and the base station is longer than the distance between the other communication terminal apparatus B and the base station. As a result, an end portion 4 of reverse control data transmitted from communication terminal apparatus A and a head portion 5 of reverse control data transmitted from communication terminal apparatus B overlap each other.

In the radio communication system using the conventional CDMA communication apparatus, the radio receiving section having a plurality of channels must be provided to independently receive reverse control data duplicated in time. This causes a problem in which a circuit scale of the radio receiving section in the base station is increased.

### SUMMARY OF THE INVENTION

An object of the present invention is to provide a CDMA communication apparatus wherein a base station can receive reverse control data independently with a small-sized circuit scale even if reverse data transmitted one frame earlier or later is duplicated in time due to propagation delay, and a CDMA communication method.

The above object of the present invention can be attained by providing guard time of data non-transmission to reverse control data transmitted from the communication terminal apparatus or providing a non-receiving portion to the end portion of reverse control data at the reception in the base station.

### BRIEF DESCRIPTION OF THE DRAWINGS

Other objects and further features of the present invention will be apparent from the following detailed description when read in conjunction with the accompanying drawings, in which:
FIG. 1 is a frame timing view at a random access time in a conventional CDMA communication apparatus;
FIG. 2 is a view showing the configuration of each of the base station and communication terminal apparatus according to a first embodiment of the present invention;
FIG. 3 is a view showing the system configuration of CDMA communication apparatus according to the first embodiment of the present invention;
FIG. 4 is a frame timing view at a random access time in the CDMA communication apparatus according to the first embodiment of the present invention;
FIG. 5 is a block diagram showing the configuration of transmitting data processing section of the communication terminal apparatus according to a second embodiment of the present invention;
FIG. 6 is a block diagram showing the configuration of transmitting data processing section of the base station according to the second embodiment of the present invention; and
FIG. 7 is a frame timing view at a random access time in the CDMA communication apparatus according to the second embodiment of the present invention.

### DETAILED DESCRIPTION OF THE PREFERRED EMBODIMENTS

Embodiments of the present invention will be specifically described with reference to the accompanying drawings.

### (First embodiment)

This embodiment shows a case in which guard time is provided to reverse control data transmitted from a communication terminal apparatus.

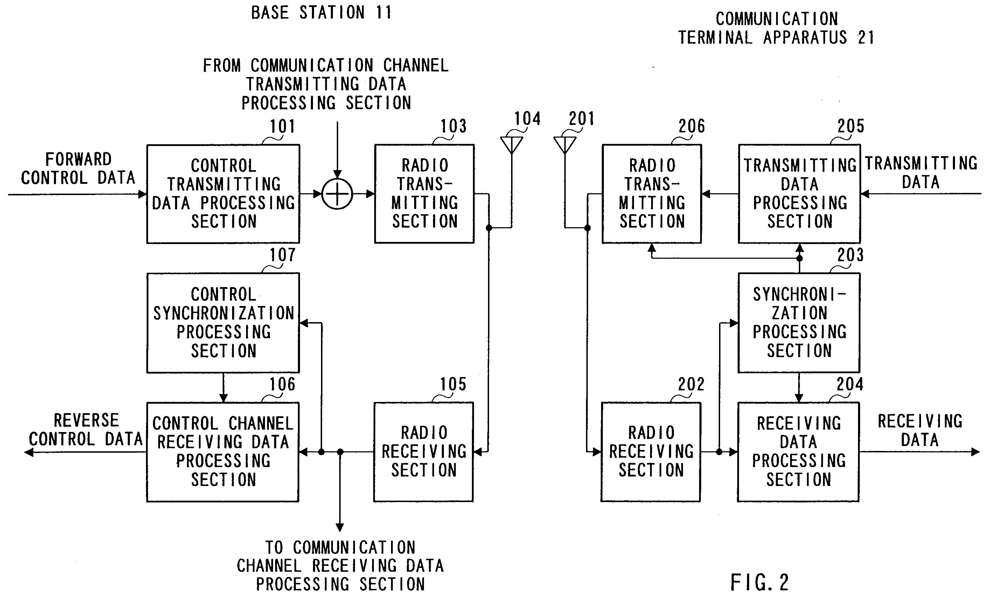

FIG. 2 is a view showing the configuration of each of the base station and communication terminal apparatus according to the first embodiment of the present invention.

First of all, each section of a base station 11 will be explained. A transmitting control data processing section 101 forms reverse control data in a frame unit having a fixed length in time, and codes the same. Then, the transmitting control data processing section 101 provides spreading processing to the above-coded data using the spreading code known in the entire system, and outputs the same to an adding section 102. The adding section 102 adds forward control data input from the transmitting control data processing section 101 and forward communication data input from a transmitting communication data processing section (not shown), and outputs the result to a radio transmitting section 103. The radio transmitting section 103 orthogonally modulates forward multiplexing data input from the adding section 102 and frequency-converts the same, and transmits the resultant data to an antenna 104.

On the other hand, a radio receiving section 105 frequency-converts reverse multiplexing data received from the antenna 104 and orthogonally demodulates the same. Then, the radio receiving section 105 outputs the above data to a control receiving data processing section 106, a control synchronization processing section 107, and a receiving communication data processing section (not shown). The control synchronization processing section 107 performs correlation detection of reverse multiplexing data input from the radio receiving section 105 using a given spreading code so as to capture timing of reverse multiplexing data. Then, the control synchronization processing section 107 outputs captured timing information to the control receiving data processing section 106. The control receiving data processing section 106 provides despreading processing and demodulating processing to multiplexing data input from the radio receiving section 105 using timing information input from the control synchronization processing section 107 so as to obtain reverse control data.

Next, the respective sections of the communication terminal apparatus 21 will be explained. A radio receiving section 202 frequency-converts reverse multiplexing data received by an antenna 201 and orthogonally demodulates the same. Then, the radio receiving section 202 outputs the resultant data to a receiving data processing section 204, and a synchronization processing section 203. The synchronization processing section 203 performs correlation detection of forward multiplexing data input from the radio receiving section 202 using the allocated spreading code so as to capture timing of forward multiplexing data. Then, the radio receiving section 202 outputs captured timing information to the receiving data processing section 204, a transmitting data processing section 205 and a radio transmitting section 206. The receiving data processing section 204 provides despreading processing and demodulating processing to forward multiplexing data input from the radio receiving section 202 using timing information input from the synchronization processing section 203 so as to obtain data directed to the self-station, which is the destination.

On the other hand, the transmitting data processing section 205 codes reverse data, which is to be transmitted to the base station, to be burst-typed data having one frame time length by use of timing information input from the synchronization processing section 203. Then, the transmitting data processing section 205 provides spreading processing to the resultant data using the spreading code known in the entire system, and outputs the same to a radio transmitting section 206. In this case, the transmitting data processing section 205 provides guard time having no data to the end portion of reverse control data to form the frame when transmitting reverse control data including call request data. In other words, reverse control data is formed to have a length shorter than a frame period of forward control data. Guard time is set to be longer than time required for the propagation of signals in the distance, which is twice as long as the radius of the cell. As a result, even if there is the communication terminal apparatus in the cell radius distance where maximum propagation delay occurs, the base station can receive the entire reverse control data in the frame period.

The radio transmitting section 206 orthogonally modulates reverse data input from the transmitting data processing section 205 and frequency-converts the same. Then, the radio transmitting section 206 controls timing using timing information input form the synchronization processing section 203, and transmits the resultant data from the antenna 201.

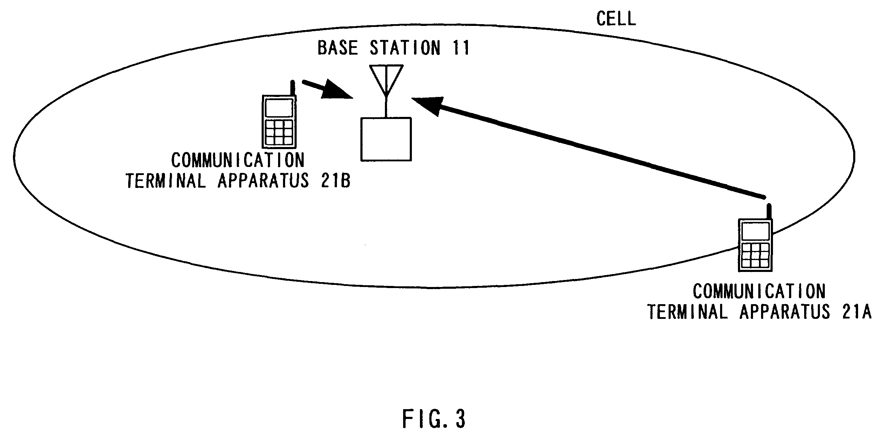

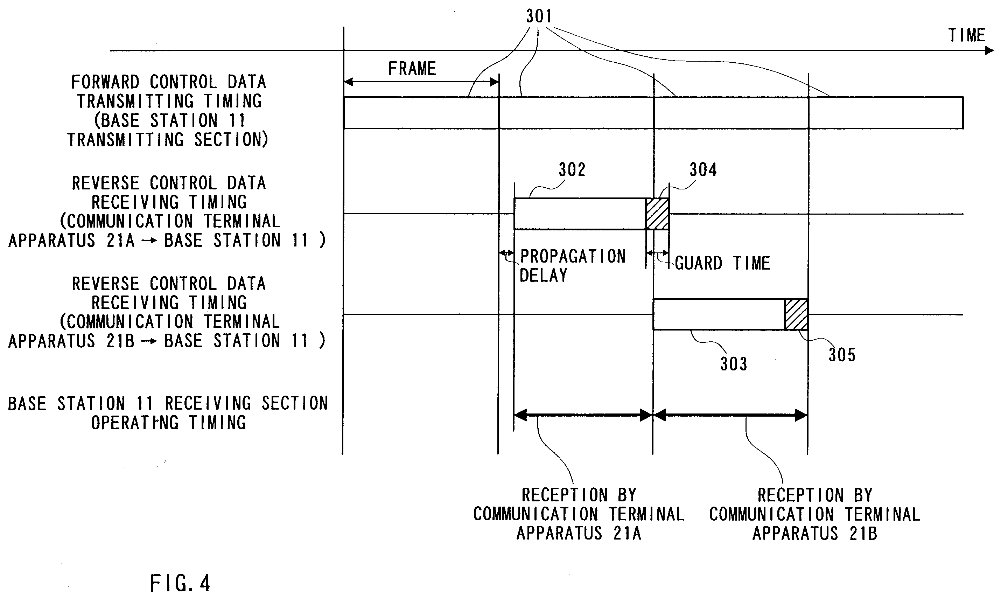

Next, the following will explain the random access operations at the time of starting communications according to this embodiment with reference to FIGS. 3 and 4.

FIG. 3 is the view showing the system configuration of CDMA communication apparatus according to this embodiment. FIG. 3 shows a case in which a communication terminal apparatus 21A is located at the position of the cell radius distance where the base station 11 is placed and a communication terminal apparatus 21B is located at the position closer to the center of the cell than the communication terminal apparatus 21A.

FIG. 4 is the frame timing view at the random access time of CDMA communication apparatus in the state of FIG.3 according to this embodiment.

The transmitting control data processing section 101 codes forward control data 301, which is to be transmitted from the base station by a control channel, in the frame unit having a fixed length in time. The coded data is subjected to spreading processing by use of the spreading code known in the entire system, and is added to forward communication data by the adding section 102. Then, the radio transmitting section 103 orthogonally modulates and frequency-converts the resultant data, and transmits the same from the antenna 104.

In a case where the communication terminal apparatuses 21A, 21B, provided in the cell, perform a call, the synchronization processing section 203 captures timing of forward multiplexing data output from the radio receiving section. Next, the transmitting data processing section 205 codes reverse control data 302, 303 including call request data to be burst-typed data of one frame time length. Then, the coded data is subjected to spreading processing by use of the spreading code known in the entire system. At this time, guard time having no data is provided to the end portions of reverse control data 302, 303. For example, in a case of a cell of 10-km radius, propagation delay time is about 66 µs at the maximum and one frame length is generally 10 ms. Therefore, necessary guard time is only 0.66% of the entire frame time.

Then, the above frame-formed reverse control data 302, 303 are orthogonally modulated and frequency-converted by the radio transmitting section 206. Then, the resultant data is synchronized with forward control data 301, and transmitted from the antenna 201.

At this time, reverse control data 302, 303 delay against frame timing of forward control data 301 due to propagation delay at the reception time in the base station 11. However, since guard time, which is longer than propagation delay time, is provided to the end portions 304, 305 of reverse control data 302, 303, the data reception in the frame is ended. Therefore, even if reverse control data 302 is transmitted from the communication terminal apparatus 21A and reverse control data 303 is transmitted from the communication terminal apparatus 21B one frame later, the base station 11 can receive reverse control data in each frame continuously by the receiving section of one channel without duplicating the reception of reverse control data 302, 303.

Thus, the base station receives all reverse control data in one frame time even if propagation delay occurs. This makes it possible to avoid the duplicate reception even if two communication terminal apparatuses transmit reverse control data one frame earlier or later. Also, this makes it possible to reduce the circuit scale of the radio receiving section of the base station.

### (Second embodiment)

The second embodiment shows a case in which reverse control data is coded using a convolutional code by the communication terminal apparatus, the time order of data sequences is altered, the data reception of the portion extending over frame time is not performed in the base station, the time order of data sequences is returned to the original, and punctured Viterbi decoding is carried out.

The structure of each of the base station and the communication terminal apparatus of this embodiment is the same as that of the first embodiment shown in FIG. 2, and the explanation will be omitted.

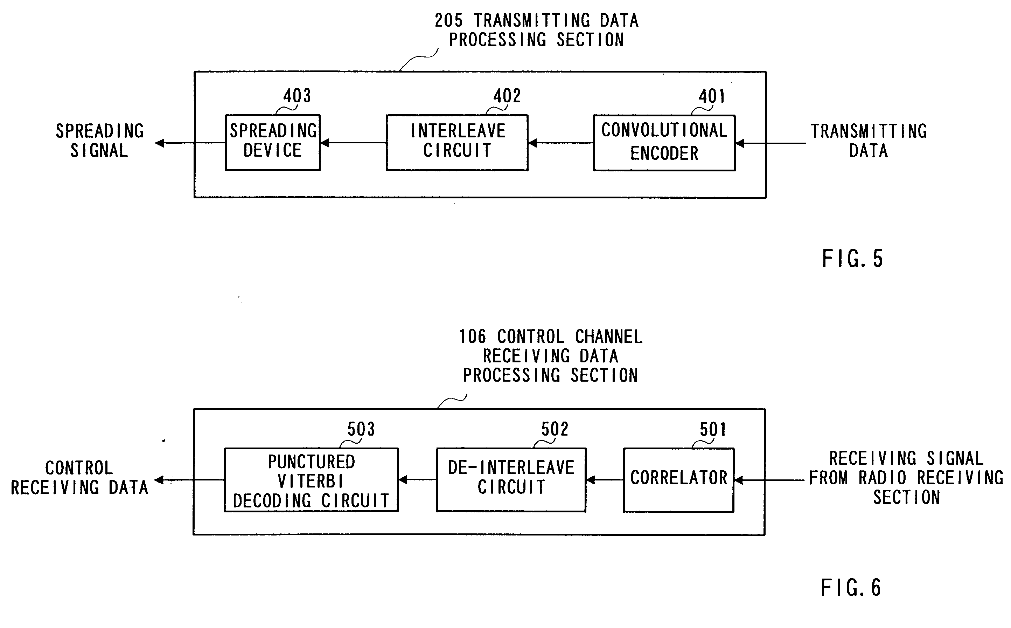

FIG. 5 is the block diagram showing the configuration of the transmitting data processing section 205 of the communication terminal apparatus according to the second embodiment. As shown in FIG. 5, a convolutional encoder 401 codes reverse data, which is to be transmitted from the communication terminal apparatus, using the convolutional code, which is an error correction code. An interleave circuit 402 alters the time order of data sequences of reverse data coded by the convolutional encoder 401. A spreading device 403 provides spreading processing to reverse data output from the interleave circuit 402 using the spreading code, and outputs the resultant data to the radio transmitting section 206.

FIG. 6 is the block diagram showing the configuration of the control channel receiving data processing section 106 of the base station according to the second embodiment. As shown in FIG. 6, a correlator 501 provides correlation processing to forward control data output from the radio receiving section 105 using the spreading code for control channel. A de-interleave circuit 502 returns the time order of data sequences of reverse control data, which has been altered by the interleave circuit 402, to the original. A punctured Viterbi decoder 503 provides the decoding of the convolutional code to forward control data output from the de-interleave circuit 502.

In this case, punctured coding processing is generally used to adjust the amount of data (coding rate) before and after coding the error code. The amount of data can be obtained by eliminating a suitable number of redundancy sequences from original coded data.

In the case of the second embodiment, redundancy is added to reverse data by the convolutional encoder. A reduction in redundancy due to punctured coding processing is corresponding to only the amount of propagation delay , when the receiving section of the base station does not receive data of the end portion extending over the next frame of reverse control data transmitted from the communication terminal apparatus. Therefore, the reduction can be almost ignored . For example, in the case of the cell of 10-km radius, since propagation delay time is about 66 µs at the maximum and one frame length is generally 10 ms, the reduction in redundancy is only 0.66% of the frame time.

Also, since the non-receiving portion, which is the final end portion of the frame, is specified, the punctured Viterbi decoder can perform the punctured Viterbi decoding with the exception of the above portion.

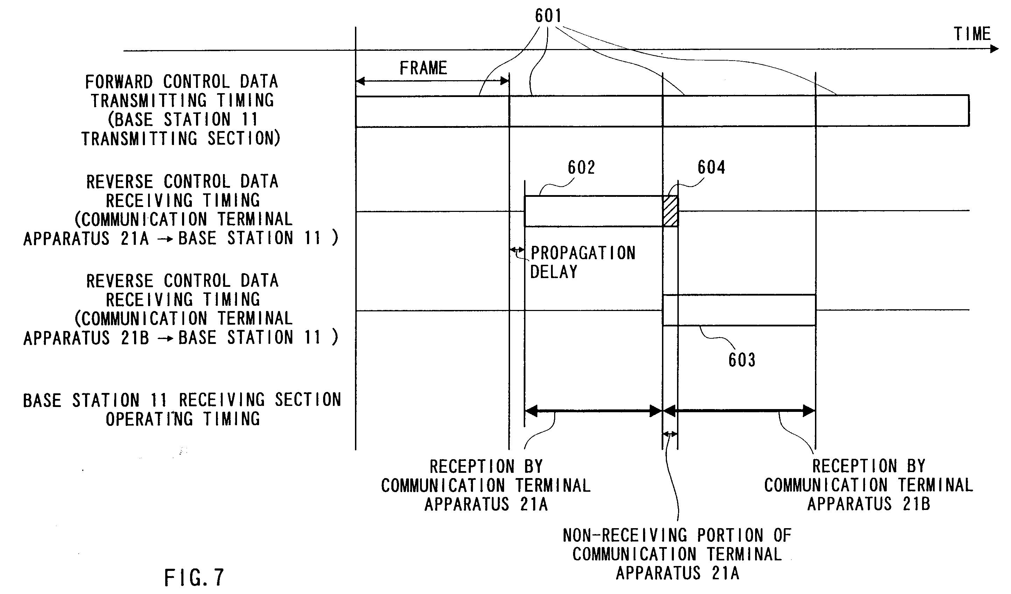

Next, the following will explain the random access operations at the time of starting communications according to this embodiment with reference to FIG. 7.

FIG. 7 is the frame timing at the random access time of CDMA communication apparatus in the state of FIG. 3 according to the second embodiment.

The transmitting control data processing section 101 codes forward control data 601, which is to be transmitted from the base station by the control channel, in the frame unit having a fixed length in time. Then, the coded data is subjected to spreading processing by use of the spreading code known in the entire system, and is added to forward communication data by the adding section 102. The radio transmitting section 103 orthogonally modulates and frequency-converts the resultant data, and transmits the same from the antenna 104.

In a case where the communication terminal apparatuses 21A, Provided in the cell, performs a call, the synchronization processing section 203 captures timing of forward multiplexing data 601 output from the radio receiving section 202. Next, forward multiplexing data 602 including call request data is convolutionally coded, which is the error correction code, by the convolutional encoder 401. Then, the time order of data sequences is altered by the interleave circuit 402, and the spreading device 403 provides spreading processing to coded data by use of the allocated spreading, and the resultant data is output to the radio transmitting section 206.

Then, the above frame-formed reverse control data 602 is orthogonally modulated and frequency-converted by the radio transmitting section 206. Then, the resultant data is synchronized with forward control data 601, and transmitted from the antenna 201.

The reverse control data 602 received by the antenna 104 is frequency-converted and orthogonally modulated by the radio receiving section 105. At this time, reverse control data 602 delays against frame timing of forward control data 601 due to propagation delay at the reception time in the base station 11. However, since the base station 11 does not receive data 604 of the end portion extending over the next frame of reverse control data 602, the data reception in the frame is ended,

Next, the correlator 501 provides correlation processing to reverse control data 602 using the spreading code for control channel. Then, the de-interleave circuit 502 returns the altered time order of data sequences to the original, and the punctured Viterbi decoder 503 performs the decoding of convolutional code.

Therefore, even if reverse control data 602 is transmitted from the communication terminal apparatus 21A and reverse control data 603 is transmitted from the communication terminal apparatus 21B one frame later, the base station 11 can receive reverse control data in each frame continuously from the receiving section of one channel without duplicating the reception of reverse control data 602, 603.

The decoding processing is thus provided to receiving data with the exception data of the portion extending over the next frame. As a result, even if two communication terminal apparatuses transmit reverse control data one frame earlier or later and reverse control data is duplicated, these data can be received and decoded independently in the base station. For this reason, the circuit scale of the radio receiving section of the base station can be reduced.

In the second embodiment, no guard time may be provided to reverse control data, which is to be transmitted from the communication terminal apparatus.

As explained above, according to CDMA communication apparatus and CDMA communication method of the present invention, guard time of data non-transmission is provided to reverse control data transmitted from the communication terminal apparatus or a non-receiving portion is provided to the end portion of reverse control data at the reception in the base station, whereby the base station can independently receive reverse control data duplicated in time with the small-sized circuit.

The present invention is not limited to the above described embodiments, and various variations and modifications may be possible without departing from the scope of the present invention.

This application is based on the Japanese Patent Application No. Hei 10-078314 filed on March 10, 1998, entire content of which is expressly incorporated by reference herein.

## Claims

1. A CDMA communication terminal apparatus comprising:
synchronization processing means (203) for detecting a frame period of receiving data and frame timing;
transmitting data processing means (205) for providing guard time to an end portion of transmitting control data so as to form a frame; and
radio transmitting means (206) for radio transmitting said control data at said frame timing.

2. The CDMA communication terminal apparatus according to claim 1, wherein said transmitting data processing means (205) sets guard time to be twice or more times as much propagation delay time in a cell radius distance.

3. A CDMA communication terminal apparatus comprising:
synchronization processing means (203) for detecting a frame period of receiving data and frame timing;
transmitting data processing means (205) for forming transmitting control data to have a frame length shorter than the frame period of said receiving data; and
radio transmitting means (206) for radio transmitting said control data at said frame timing.

4. The CDMA communication terminal apparatus according to claim 3, wherein said transmitting data processing means (205) sets the frame length of transmitting control data to be shorter than a length obtained by subtracting time twice or more times propagation delay time in a cell radius distance from the frame period.

5. A CDMA base station apparatus comprising: radio receiving means (105) for receiving control data transmitted from the other station with the exception of data of a portion exceeding a frame period; and
decoding means (106) for providing decoding processing to said received control data.

6. A CDMA base station apparatus comprising:
radio receiving means (105) for receiving control data transmitted from the other station after being subjected to error correction code processing and alternating its time order, with the exception of data of a portion exceeding a frame period;
data reproducing means (106) for returning the time order of said received control data to the original; and
decoding means for providing decoding processing to said control data subjected to said error correction processing.

7. A CDMA communication method comprising the steps of:
detecting a frame period of receiving data and frame timing;
providing guard time to an end portion of transmitting control data so as to form a frame; and
radio transmitting said control data at said frame timing.

8. The CDMA communication method according to claim 9, wherein guard time is set to be twice or more times as much propagation delay time in a cell radius distance.

9. A CDMA communication method comprising the steps of:
detecting a frame period of receiving data and frame timing;
forming transmitting control data to have a frame length shorter than the frame period of said receiving data; and
radio transmitting said control data at said frame timing.

10. The CDMA communication method according to claim 11, wherein the frame length of transmitting control data is set to be shorter than a length obtained by subtracting time twice or more times propagation delay time in a cell radius distance from the frame period.

11. A CDMA communication method comprising the steps of:
receiving control data transmitted from the other station with the exception of data of a portion exceeding a frame period; and
providing decoding processing to said received control data.

12. A CDMA communication method comprising the steps of:
receiving control data transmitted from the other station after being subjected to error correction code processing and alternating its time order, with the exception of data of a portion exceeding a frame period;
returning the time order of said received control data to the original; and
providing decoding processing to said control data subjected to said error correction processing.
